# EUROPÄISCHE PATENTANMELDUNG

(11) **EP 2 570 025 A1**
(43) Veröffentlichungstag der Anmeldung: **20.03.2013**
(21) Anmeldenummer: 12183362.8
(22) Anmeldetag: 06.09.2012
(51) Int. Cl.: A01K 13/00

(54) **Handschuh**

(30) Priorität: 13.09.2011 DE 202011051270 U
(71) Anmelder: MELITTA HAUSHALTSPRODUKTE GmbH & Co. Kommanditgesellschaft, 32427 Minden (DE)
(72) Erfinder: Vorfeld, Udo, 32051 Herford (DE); Schultze, Detlef, 32425 Minden (DE); Ritthaler, Lisa, 76185 Karlsruhe (DE); Bassarek, Julia, 90530 Wendelstein (DE); Schabbach, Wolfgang, 66123 Saarbrücken (DE)
(74) Vertreter: Kleine, Hubertus

(57) **Zusammenfassung**

Handschuh (1), insbesondere zum Reinigen von Tierfell, mit einem Innenraum, in den die Hand eines Benutzers einsteckbar ist, wobei der Handschuh (1) eine erste Seite (3) aus einem feuchtigkeitsaufsaugenden Material und eine zweite Seite (2) aufweist, an der zumindest bereichsweise Reinigungs- oder Massagemittel (4) vorgesehen sind.

## Beschreibung

Die vorliegende Erfindung betrifft einen Handschuh, insbesondere zum Reinigen von Tierfell, mit einem Innenraum, in den die Hand eines Benutzers einsteckbar ist.

Zum Trocknen von Tierfell werden meist Handtücher eingesetzt, die über das nasse Tierfell gerieben werden. Dies ist in der Handhabung schwierig, weil mit einer Hand das Tier, beispielsweise der Hund, festgehalten werden muss, während mit der anderen Hand das Handtuch über das Fell des sich häufig auch bewegenden Tieres gerieben wird. Neben der Trocknung des Tierfells übernimmt das Handtuch keine weitere Funktion.

Ferner sind diverse Hundebürsten und Massagemittel bekannt, mittels denen eine Pflege des Tierfells durchgeführt wird. Die meisten Massagemittel können sich allerdings nur begrenzt an die Kontur des Körpers des Tieres anpassen.

Es ist daher Aufgabe der vorliegenden Erfindung, einen Handschuh zum Reinigen von Tierfell zu schaffen, der eine einfache Handhabung ermöglicht und zudem neben einem Trocknen auch eine Reinigung oder Massage ermöglicht.

Diese Aufgabe wird mit einem Handschuh mit den Merkmalen des Anspruches 1 gelöst.

Der erfindungsgemäße Handschuh umfasst eine erste Seite aus einem Feuchtigkeit aufsaugenden Material, so dass diese Seite besonders gut zur Trocknung des nassen Tierfells eingesetzt werden kann. Ferner ist eine zweite Seite vorgesehen, an der zumindest bereichsweise Reinigungs- oder Massagemittel vorgesehen sind. Durch Drehen des Handschuhs kann der Benutzer auf einfache Weise zusätzlich zur Trocknung eines Tierfells auch eine Massage oder eine Reinigung vornehmen und dem Tier die notwendige Behandlung zukommen lassen.

Vorzugsweise weist der Handschuh an der ersten Seite ein textiles Material auf. Das textile Material kann dabei strukturiert sein und Mittel zum Aufsaugen von Feuchtigkeit aufweisen, beispielsweise durch Einsatz eines kurzflorigen oder langflorigen Materials. Auch andere Materialien können eingesetzt werden.

Vorzugsweise weisen die Reinigungs- oder Massagemittel Noppen auf. Die Reinigungs- oder Massagemittel können dabei aus einem thermoplastischen Elastomer gebildet sein und im Wesentlichen plattenförmig an der zweiten Seite des Handschuhs fixiert sein. Dabei kann eine konturierte Noppenplatte, beispielsweise mit einem Pfotenmuster eingesetzt werden, die nach Ausstanzung der Noppenfelder von Innen in den Handschuh eingenäht wird, was optisch einen hochwertigen Eindruck vermittelt. Zudem kann eine konturierte Gummi-Platte mit Noppenflächen von Außen auf die Oberfläche genäht werden.

Dabei sind die Reinigungs- oder Massagemittel soweit elastisch ausgebildet, dass sie sich problemlos an die Kontur eines Tierkörpers anpassen können. Durch die hervorstehenden Noppen kann ein Kämmen des Fells erfolgen, wobei die Noppen eine Hohe von 2 mm bis 1,5 cm besitzen können.

Gemäß einer weiteren Ausgestaltung der Erfindung ist an dem Handschuh mindestens eine hervorstehende Lasche zum Reinigen der Zwischenräume von Tierpfoten ausgebildet. Die Lasche kann dabei an einer zur Öffnung des Handschuhs gegenüberliegenden Seite angeordnet sein, so dass sie durch die Fingerspritzen des Benutzers leicht bewegt werden kann. Vorzugsweise sind an zwei Ecken des Handschuhs jeweils Laschen zum Reinigen der Tierpfoten ausgebildet. Die Laschen können aus einem textilen Material mit einer Struktur ausgebildet sein, wobei die Laschen durch die Zwischenräume der Tierpfoten durchgezogen werden können.

Für eine gute Führung des Handschuhs kann der Innenraum mindestens eine Tasche zum Einstecken eines Daumens aufweisen. Vorzugsweise umfasst der Innenraum an gegenüberliegenden Seiten jeweils eine Tasche zum Einstecken eines Daumens, so dass der Benutzer bei Einsatz der ersten Seite eine Tasche verwendet, um den Daumen einzustecken, während bei der Benutzung der zweiten Seite die andere Tasche mit dem Daumen verwendet wird. Dadurch wird ein sicherer Halt der Hand in dem Handschuh gewährleistet, wobei der Innenraum im Übrigen die Finger des Benutzers aufnimmt. Es ist natürlich auch möglich, noch weitere Unterteilungen in dem Innenraum vorzusehen, falls dies gewünscht wird. Durch die zweite Daumentasche wird auch der Anforderung Rechnung getragen, daß der Handschuh sowohl von Links- als auch Rechtshändern gleichsam angewendet werden kann.

Vorzugsweise ist an einer Innenseite des Handschuhs mindestens ein Zugband festgelegt. Ein elastisches Zugband kann sich dabei benachbart zu einer Eingriffsöffnung des Handschuhs erstrecken, vorzugsweise im Wesentlichen senkrecht zu einer Einsteckrichtung der Hand. Dadurch kann das Zugband für eine gute Fixierung des Handschuhs an der Hand sorgen. Ferner lässt sich das Umstülpen über ein Zugband leichter vornehmen, insbesondere wenn das Zugband an gegenüberliegenden Seiten am Handschuh festgelegt ist und dazwischen ein schlaufenförmiger Abschnitt gebildet ist.

Für eine angenehme Haptik des Handschuhs ist vorzugsweise an der zum Innenraum gewandten Seite ein Innenfutter vorgesehen.

Gemäß einer weiteren Ausgestaltung der Erfindung ist zwischen dem Innenraum und einer Außenseite des Handschuhs mindestens eine wasserundurchlässige Schicht vorgesehen ist, beispielsweise eine wasserundurchlässige Beschichtung aus Polyurethan, Silikon oder anderen Materialien. Wenn der Innenraum gegenüber einer Außenseite des Handschuhs mindestens eine wasserundurchlässige Schicht aufweist, bleibt die Hand des Benutzers während der Reinigung trocken und kommt nicht mit dem möglicherweise schmutzigen Tierfell in Berührung. Dies ermöglicht eine besonders hygienische Handhabung für den Benutzer.

Die Erfindung wird nachfolgend anhand eines Ausführungsbeispiels mit Bezug auf die beigefügten Zeichnungen näher erläutert. Es zeigen:
- Figur 1: eine Vorderansicht eines erfindungsgemäßen Handschuhs;
- Figur 2: eine Rückansicht des Handschuhs der Figur 1, und
- Figur 3: eine Ansicht einer Innenseite des Handschuhs der Figur 1.

Ein Handschuh 1 umfasst einen beutelförmigen Körper, der an der Außenseite eine erste Seite 3 und eine zweite Seite 2 aufweist. Die erste Seite 3 besteht aus einem textilen Material, das Feuchtigkeit aufsaugen kann und auch einen Flor oder andere aufsaugende Mittel aufweisen kann.

Auf der gegenüberliegenden zweiten Seite 2 sind Reinigungs- oder Massagemittel 4 vorgesehen, die aus einem thermoplastischen Elastomer gebildet sind, und die nach außen hervorstehende Noppen 5 aufweisen. Die Reinigungs-oder Massagemittel 4 sind dabei im Wesentlichen plattenförmig ausgebildet, beispielsweise in der Kontur einer Tierpfote, und in die textile Struktur an der zweiten Seite 2 eingenäht, eingeschweißt oder anderweitig festgelegt. Die Reinigungs- oder Massagemittel 4 sind dabei soweit elastisch, dass sie sich an die Kontur eines Tierkörpers anpassen können.

An gegenüberliegenden Seiten des Handschuhs 1 sind jeweils Taschen 6 zum Einstecken eines Daumens vorgesehen. Dadurch kann der Benutzer bei Verwendung der ersten Seite 3 wahlweise die linke oder rechte Tasche 6 zum Einstecken des Daumens verwenden und bei Bedarf den Handschuh 1 dann um 180° drehen, um dann die zweite Seite 2 einzusetzen und dabei den Daumen in die andere Tasche 6 einzustecken. Diese Möglichkeit erhält der Benutzer unabhängig davon, ob er Rechtshänder oder Linkshänder ist.

Der Handschuh 1 umfasst einen Bund 8, der elastisch ausgebildet ist und eine Öffnung zum Einstecken der Hand des Benutzers aufweist. Auf der zu dem Bund 8 gegenüberliegenden Seite sind an den Ecken des Handschuhs 1 jeweils hervorstehende Laschen 7 ausgebildet, die zum Reinigen von Tierpfoten ausgebildet sind. Die Laschen 7 besitzen dabei eine Länge zwischen 0,5 cm und 3 cm, insbesondere 1 bis 2,5 cm, und sind aus einem Flächengebilde herstellt, das durch schmale Zwischenräume an den Pfoten durchgezogen werden kann.

Um den sicheren Halt des Handschuhs 1 an der Hand eines Benutzers zu gewährlisten, ist ein elastisches Band vorgesehen, das an der ersten Seite 3 zu einem Zusammenziehen und einer Querfalte 9 führt.

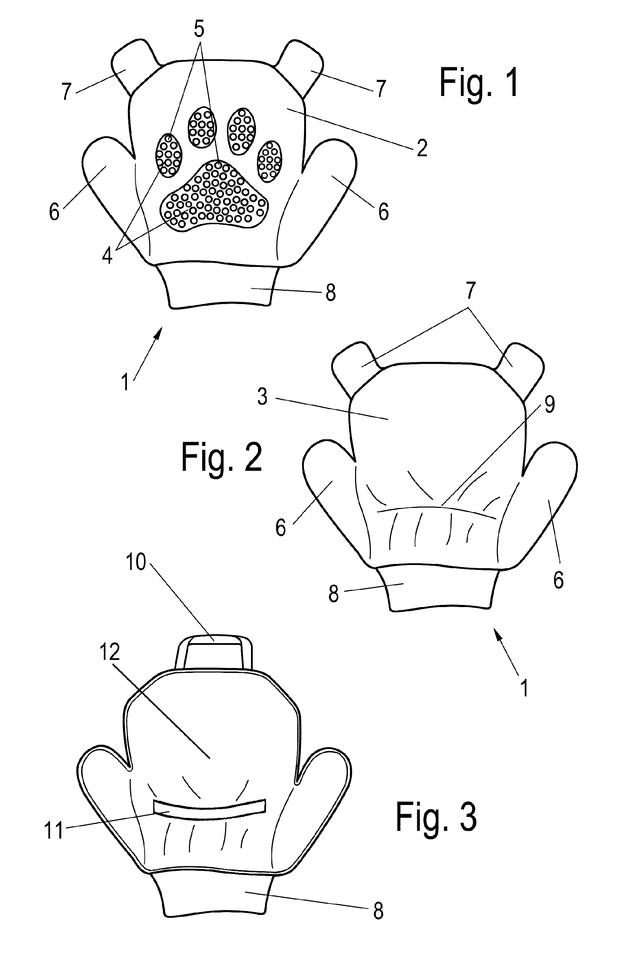

In Figur 3 ist eine Innenseite des Handschuhs gezeigt, bei dem das elastische Band 11 zu sehen ist. Das elastische Band 11 zieht das Material des Handschuhs 1 an der ersten Seite 3 zusammen und sorgt somit für einen sicheren Halt an der Benutzerhand.

Ferner ist auf der zu dem Bund 8 abgewandten Seite ein Zugband 10 vorgesehen, das schlaufenförmig angeordnet ist und an gegenüberliegenden Endseiten an dem Handschuh 1 fixiert ist. Über das Zugband 10 kann der Handschuh auf einfache Weise nach außen gestülpt werden, beispielsweise um nach einer maschinellen Reinigung des Handschuhs 1 die Innenseite zu trocknen. Die Innenseite ist ferner mit einem Futter 12 versehen, das für eine angenehme Haptik sorgt.

Bei dem Handschuh 1 ist zwischen der Innenseite mit dem Futter 12 und der Außenseite mit den Seiten 2 und 3 eine wasserundurchlässige Schicht angeordnet, beispielsweise eine Folie. Dadurch bleibt die Hand des Benutzers weitgehend vor Feuchtigkeit geschützt und ermöglicht eine angenehme Handhabung des Handschuhs 1. Es ist natürlich möglich, die wasserundurchlässige Schicht an dem Handschuh 1 wegzulassen, damit die Trocknung vereinfacht wird. Dadurch kann auch auf das Zugband 10 am Handschuh 1 verzichtet werden.

## Patentansprüche

1. Handschuh (1), insbesondere zum Reinigen von Tierfell, mit einem Innenraum, in den die Hand eines Benutzers einsteckbar ist, **dadurch gekennzeichnet, dass** der Handschuh (1) eine erste Seite (3) aus einem feuchtigkeitsaufsaugenden Material und eine zweite Seite (2) aufweist, an der zumindest bereichsweise Reinigungs- oder Massagemittel (4) vorgesehen sind.

2. Handschuh nach Anspruch 1, **dadurch gekennzeichnet, dass** der Handschuh (1) an der ersten Seite ein textiles Material aufweist.

3. Handschuh nach Anspruch 1 oder 2, **dadurch gekennzeichnet, dass** die Reinigungs- oder Massagemittel (4) Noppen (5) aufweisen.

4. Handschuh nach einem der vorhergehenden Ansprüche, **dadurch gekennzeichnet, dass** die Reinigungs- oder Massagemittel (4) aus einem thermoplastischen Elastomer gebildet sind.

5. Handschuh nach einem der vorhergehenden Ansprüche, **dadurch gekennzeichnet, dass** an dem Handschuh (1) mindestens eine hervorstehende Lasche (7) zum Reinigen der Zwischenräume von Tierpfoten ausgebildet ist.

6. Handschuh nach einem der vorhergehenden Ansprüche, **dadurch gekennzeichnet, dass** der Innenraum mindestens eine Tasche (6) zum Einstecken eines Daumens aufweist.

7. Handschuh nach einem der vorhergehenden Ansprüche, **dadurch gekennzeichnet, dass** der Innenraum an gegenüberliegenden Seiten jeweils eine Tasche (6) zum Einstecken eines Daumens aufweist.

8. Handschuh nach einem der vorhergehenden Ansprüche, **dadurch gekennzeichnet, dass** an einer Innenseite des Handschuhs (1) ein Zugband festgelegt ist.

9. Handschuh nach einem der vorhergehenden Ansprüche, **dadurch gekennzeichnet, dass** an dem Handschuh (1) auf der zum Innenraum gewandten Seite ein Innenfutter (12) vorgesehen ist.

10. Handschuh nach einem der vorhergehenden Ansprüche, **dadurch gekennzeichnet, dass** zwischen dem Innenraum und einer Außenseite des Handschuhs (1) mindestens eine wasserundurchlässige Schicht vorgesehen ist.
